# EUROPEAN PATENT SPECIFICATION

(11) **EP 3 328 013 B1**
(45) Date of publication and mention of the grant of the patent: **12.08.2020**
(21) Application number: 15898768.5
(22) Date of filing: 12.10.2015
(51) Int. Cl.: G06F 21/45, H04L 29/06

(54) **INFORMATION PROCESSING METHOD AND DEVICE**
INFORMATIONSVERARBEITUNGSVERFAHREN UND -VORRICHTUNG
PROCÉDÉ ET DISPOSITIF DE TRAITEMENT D'INFORMATIONS

(30) Priority: 17.07.2015 CN 201510423637
(43) Date of publication of application: 30.05.2018
(73) Proprietor: ZTE Corporation, Shenzhen, Guangdong 518057 (CN)
(72) Inventor: HAO, Zhijian, Shenzhen Guangdong 518057 (CN); ZHU, Yu, Shenzhen Guangdong 518057 (CN)
(74) Representative: Lavoix
(86) International application number: PCT/CN2015/091732
(87) International publication number: WO 2017/012212

(56) References cited:
- CN-A- 103 095 735
- CN-A- 103 685 255
- CN-A- 104 468 581
- US-A1- 2005 175 201
- US-A1- 2008 320 588
- US-A1- 2010 100 948
- US-A1- 2012 167 180

## Description

### TECHNICAL FIELD

The disclosure relates to information processing technology, and in particular to an information processing method, device and system, and a computer storage medium.

### BACKGROUND

At present, a terminal (mobile phone, tablet computer or the like) has been widely applied to daily life and work of people, information stored on the terminal by a user is increasing, and therefore the safety of the terminal draws more attention from the user.

Usually, in order to ensure the safety of the terminal, the user may set a password. Every time the user starts the terminal, the user needs to input the password to unlock the terminal. Correspondingly, different applications (QQ, WeChat or the like) have corresponding user names and passwords. Once the terminal is lost, the information stored on the terminal is possibly leaked.

In addition, generally speaking, user names correspond to passwords in a one-to-one manner. If the user forgets the password of a certain application, this application will not be opened. Although the password may be found in a certain manner, it will make a lot of trouble, thereby consuming time and labor.

US 2010/0100948 A1 provides a rules driven multiple passwords system.

US 2005/0175201 A1 provides apparatus for securely resetting a key for accessing a computer program.

US 2008/0320588 A1 provides system of assigning permissions to a user by password.

### SUMMARY

In view of this, embodiments of the disclosure are intended to provide an information processing method, device and system as defined in the attached independent claim, capable of conveniently invalidating a leaked password, preventing leakage of important data immediately, and improving the safety level of a terminal. Further improvements are provided in the dependent claims.

Thus, a leaked password can be conveniently invalidated, leakage of important data can be prevented immediately, the safety level of a mobile terminal is improved, and the usage experience of a user is improved.

### BRIEF DESCRIPTION OF DRAWINGS

FIG. 1 is a flowchart 1 of an information processing method according to an embodiment of the disclosure.
FIG. 2 is a flowchart 2 of an information processing method according to an embodiment of the disclosure.
FIG. 3 is a flowchart 3 of an information processing method according to an embodiment of the disclosure.
FIG. 4 is a flowchart 4 of an information processing method according to an embodiment of the disclosure.
FIG. 5 is a flowchart 5 of an information processing method according to an embodiment of the disclosure.
FIG. 6 is a structure diagram 1 of an information processing device according to an embodiment of the disclosure.
FIG. 7 is a structure diagram 2 of an information processing device according to an embodiment of the disclosure.
FIG. 8 is a structure diagram of an information processing system according to an embodiment of the disclosure.

### DETAILED DESCRIPTION

The technical solution of the disclosure will be elaborated below in conjunction with the drawings and the specific embodiments in detail.

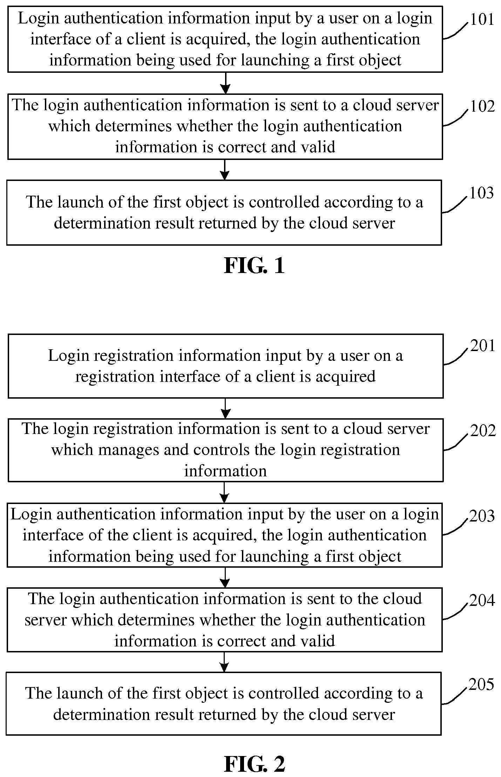

FIG. 1 is a flowchart 1 of an information processing method according to an embodiment of the disclosure. As illustrated in FIG. 1, the information processing method, applied to a terminal side, mainly includes the operations as follows.

In step 101, login authentication information input by a user on a login interface of a client is acquired, the login authentication information being used for launching a first object.

Here, the first object may be a terminal, or may be an application installed on the terminal.

Here, the application includes an in-built application of the terminal such as a contact application, or includes a third-party application installed by a user such as a game application, an instant chat application or a mail application.

In a specific sub-embodiment, when a user inputs login authentication information on a login interface of a client, the login authentication information may be input manually, or the login authentication information may be input by means of input equipment (such as a keyboard, a mouse and the like).

In a specific sub-embodiment, when the first object is an application, the login authentication information may include a user name and a password. When the first object is a terminal (such as a mobile phone), if login authentication information is input on the terminal, the login authentication information may only include a password, if login authentication information associated with the terminal is input on other terminals, the login authentication information not only includes a user name of the terminal, but also includes a password.

Here, when the first object is a terminal, the user name may be first information stored on a user identity card of the terminal. The user identity card may be a Subscriber Identity Module (SIM) card, a User Identifier Module (UIM) card or the like, and the first information may be an SIM card number and a UIM card number.

In step 102, the login authentication information is sent to a cloud server which determines whether the login authentication information is correct and valid.

In a specific sub-embodiment, the cloud server stores the logic authentication information associated with the first object.

In step 103, the launch of the first object is controlled according to a determination result returned by the cloud server.

In a specific sub-embodiment, the operation that the launch of the first object is controlled according to the determination result returned by the cloud server may include the operations as follows.

When the determination result is that the login authentication information is incorrect or correct but invalid, the client is controlled not to launch the first object.

When the determination result is that the login authentication information is correct and valid, the client is controlled to launch the first object.

For example, when the first object is an application, if the login authentication information is incorrect or correct but invalid, the application is not opened; and if the login authentication information is correct and valid, the application is opened.

For example, when the first object is a terminal, if the login authentication information is incorrect or correct but invalid, it is unsuccessful to unlock the terminal; and if the login authentication information is correct and valid, it is successful to unlock the terminal, so that the user can use the terminal, e.g., view contents stored in the terminal.

In the above solution, the method further includes the steps as follows.

Login registration information input by a user on a registration interface of a client is acquired, wherein the login registration information includes login authentication information for launching a first object, the login authentication information includes user names and passwords, a user name corresponds to N passwords with different levels, and N is a positive integer greater than or equal to 2.

The login registration information is sent to a cloud server which manages and controls the login registration information.

It is important to note that one of the N passwords with different levels has the highest level, the highest-level password having a right of resetting logic authentication information (including a user name and/or a password).

Usually, when a user name is input correctly, the first object can be launched by inputting any one of the N passwords with different levels. However, when a high-level password is input, low-level passwords will be invalidated.

Here, the form of the password is not limited, and the password may be in a form of figure or may be in other forms of graph.

In the present embodiment, the terminal may be a mobile phone, a tablet computer, a laptop or the like.

For example, when a user uses a mobile phone, after awakening the mobile phone, the user needs to input a password to unlock the mobile phone. In this case, the user may unlock the mobile phone by inputting any one of N passwords. That is to say, as long as the user can remember one of the N passwords, the mobile phone can be unlocked. Thus, the problem of complexity in password finding caused by the case that a user forgets a unique password can be avoided. Moreover, because the password is stored in a cloud server, the safety level of the mobile phone is improved. Even if the user leaks a password unconsciously and a person who steals the mobile phone unlocks the mobile phone by using the leaked password, the person who steals the mobile phone does not have a right of changing the password. The user may input the user name and other passwords of the stolen mobile phone on other mobile phones, invalidate the leaked low-level password, or even change the password of the stolen mobile phone. When the leaked low-level password is invalidated, the person who steals the mobile phone will no longer unlock the stolen mobile phone. Thus, leakage of important data in a mobile phone can be prevented immediately.

By means of the technical solution of the present embodiment, login authentication information input on a login interface of a client is acquired, wherein the login authentication information is used for launching a first object; the login authentication information is sent to a cloud server, in order that the cloud server determines whether the login authentication information is correct and valid; and the launch of the first object is controlled according to a determination result returned by the cloud server. Thus, a leaked password can be conveniently invalidated, leakage of important data can be prevented immediately, the safety level of a mobile terminal is improved, and the usage experience of a user is improved.

### Embodiment 2

FIG. 2 is a flowchart 2 of an information processing method according to an embodiment of the disclosure. As illustrated in FIG. 2, the information processing method, applied to a terminal side, mainly includes the operations as follows.

In step 201, login registration information input by a user on a registration interface of a client is acquired.

Herein, the login registration information includes login authentication information for launching a first object, the login authentication information includes user names and passwords, a user name corresponds to N passwords with different levels, and N is a positive integer greater than or equal to 2.

Here, the first object may be a terminal, or may be an application installed on the terminal.

Here, the application includes an in-built application of the terminal such as a contact application, or includes a third-party application installed by a user such as a game application, an instant chat application or a mail application.

Usually, when a user name is input correctly, the first object can be launched by inputting any one of the N passwords with different levels. However, when a high-level password is input, low-level passwords will be invalidated.

It is important to note that one of the N passwords with different levels has the highest level, the highest-level password having a right of resetting logic authentication information (including a user name and/or a password).

Here, the form of the password is not limited, and the password may be in a form of figure or may be in other forms of graph.

In step 202, the login registration information is sent to a cloud server which manages and controls the login registration information.

In step 203, login authentication information input by the user on a login interface of the client is acquired, the login authentication information being used for launching a first object.

In a specific sub-embodiment, when the first object is an application, the login authentication information may include a user name and a password. When the first object is a terminal (such as a mobile phone), if login authentication information is input on the terminal, the login authentication information may only include a password, if login authentication information associated with the terminal is input on other terminals, the login authentication information not only includes a user name of the terminal, but also includes a password.

Here, when the first object is a terminal, the user name may be first information stored on a user identity card on the terminal, the user identity card may be an SIM card, a UIM card or the like, and the first information may be an SIM card number and a UIM card number.

In step 204, the login authentication information is sent to the cloud server which determines whether the login authentication information is correct and valid.

In step 205, the launch of the first object is controlled according to a determination result returned by the cloud server.

In a specific sub-embodiment, the operation that the launch of the first object is controlled according to the determination result returned by the cloud server may include the operations as follows.

When the determination result is that the login authentication information is incorrect or correct but invalid, the client is controlled not to launch the first object.

When the determination result is that the login authentication information is correct and valid, the client is controlled to launch the first object.

For example, when the first object is an application, if the login authentication information is incorrect or correct but invalid, the application is not opened; and if the login authentication information is correct and valid, the application is opened.

For example, when the first object is a terminal, if the login authentication information is incorrect or correct but invalid, it is unsuccessful to unlock the terminal; and if the login authentication information is correct and valid, it is successful to unlock the terminal, so that the user can use the terminal, e.g., view contents stored in the terminal.

In the present embodiment, the terminal may be a mobile phone, a tablet computer, a laptop or the like.

For example, when an application A is launched, it is necessary to input a user name and a password to open the application A. In this case, a user may open the application A by inputting any one of N passwords. That is to say, as long as the user can remember one of the N passwords, the application A can be opened. Thus, the problem of complexity in password finding caused by the case that a user forgets a unique password can be avoided. Moreover, because the password is stored in a cloud server, the safety level of the mobile phone is improved. Even if the user leaks a password unconsciously, a person who steals the user name and password of the application A does not have a right of changing the password. The user may input the user name and other passwords of the application A on other terminals equipped with the application A, and invalidate the leaked low-level password. After the leaked low-level password is invalidated, a person who steals the user name and password of the application A will no longer open the application A. Thus, the user name and password of an application can be retrieved, and important data of the application A can also be retrieved.

By means of the technical solution of the present embodiment, login registration information input by a user on a registration interface of a client is acquired; the login registration information is sent to a cloud server which manages and controls the login registration information; login authentication information input by the user on a login interface of the client is acquired, wherein the login authentication information is used for launching a first object; the login authentication information is sent to the cloud server, in order that the cloud server determines whether the login authentication information is correct and valid; and the launch of the first object is controlled according to a determination result returned by the cloud server. Thus, a leaked password can be conveniently invalidated, leakage of important data can be prevented immediately, the safety level of a mobile terminal is improved, and the usage experience of a user is improved.

### Embodiment 3

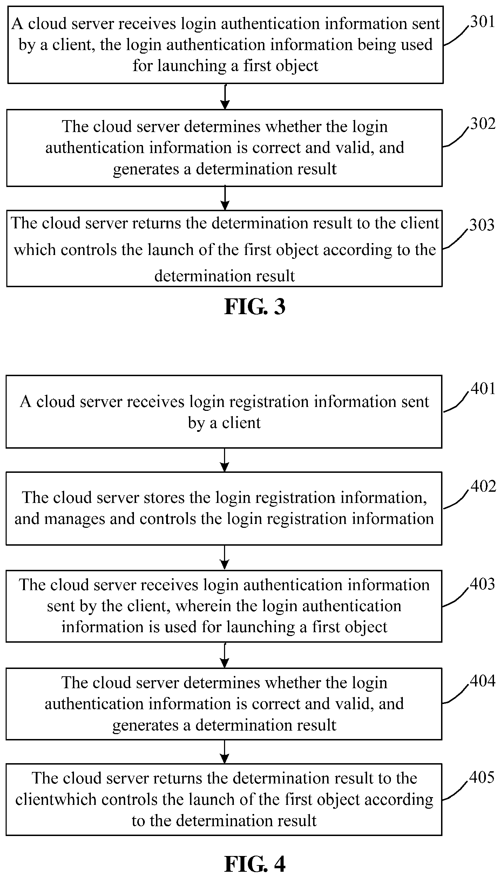

FIG. 3 is a flowchart 3 of an information processing method according to an embodiment of the disclosure. As illustrated in FIG. 3, the information processing method, applied to a server side, mainly includes the operations as follows.

In step 301, a cloud server receives login authentication information sent by a client, the login authentication information being used for launching a first object.

Here, the first object may be a terminal, or may be an application installed on the terminal.

Here, the application includes an in-built application of the terminal such as a contact application, or includes a third-party application installed by a user such as a game application, an instant chat application or a mail application.

In step 302, the cloud server determines whether the login authentication information is correct and valid, and generates a determination result.

Herein, the cloud server stores login authentication information for launching a first object, the login authentication information includes user names and passwords, a user name corresponds to N passwords with different levels, and N is a positive integer greater than or equal to 2.

That is to say, if login authentication information sent by the client includes a user name and a password, when the cloud server receives the login authentication information sent by the client and the user name is correct, it is determined whether the password is one of the N passwords, if so, it is determined that the login authentication information is correct, and if not, it is determined that the login authentication information is incorrect.

It should be note that when the user launches the first object by using a high-level password, a low-level password will be invalidated by the cloud server.

That is to say, it is supposed that a user name B corresponds to five passwords with different levels, namely a password 1, a password 2, a password 3, a password 4 and a password 5, wherein the levels of the password 1, the password 2, the password 3, the password 4 and the password 5 are in an ascending order. The user may launch the first object by using any one of the five passwords. When the user launches the first object by using the password 1, the five passwords are valid passwords; and when the user launches the first object by using the password 2, the password 1 will be invalidated. Likewise, when the user launches the first object by using the password 3, the password 1 and the password 2 will be invalidated, and in this case, if the user still inputs the password 1 or the password 2, the password 1 or the password 2 is determined as an invalid password.

In a specific sub-embodiment, the operation of determining whether the login authentication information is correct and valid may include the operation as follows.

When it is determined that the login authentication information is correct and valid, it is determined whether lower-level login authentication information is present, and if so, the lower-level login authentication information is set as an invalid state.

In step 303, the cloud server returns the determination result to the client which controls the launch of the first object according to the determination result.

In a specific sub-embodiment, when the determination result is that the login authentication information is incorrect or correct but invalid, the client does not launch the first object; and when the determination result is that the login authentication information is correct and valid, the client launches the first object.

By means of the technical solution of the present embodiment, a cloud server receives login authentication information sent by a client, wherein the login authentication information is used for launching a first object; the cloud server determines whether the login authentication information is correct and valid, and generates a determination result; and the cloud server returns the determination result to the client, in order that the client controls the launch of the first object according to the determination result. Thus, login authentication information for a first object is managed and controlled by a cloud server, so that a leaked password can be conveniently invalidated, leakage of important data can be prevented immediately, the safety level of a mobile terminal is improved, and the usage experience of a user is improved.

### Embodiment 4

FIG. 4 is a flowchart 4 of an information processing method according to an embodiment of the disclosure. As illustrated in FIG. 4, the information processing method, applied to a server side, mainly includes the operations steps as follows.

In step 401, a cloud server receives login registration information sent by a client.

Herein, the login registration information includes login authentication information for launching a first object, the login authentication information includes user names and passwords, a user name corresponds to N passwords with different levels, and N is a positive integer greater than or equal to 2.

In step 402, the cloud server stores the login registration information, and manages and controls the login registration information.

In step 403, the cloud server receives login authentication information sent by the client, wherein the login authentication information is used for launching a first object.

Here, the first object may be a terminal, or may be an application installed on the terminal.

Here, the application includes an in-built application of the terminal such as a contact application, or includes a third-party application installed by a user such as a game application, an instant chat application or a mail application.

In step 404, the cloud server determines whether the login authentication information is correct and valid, and generates a determination result.

The operation of determining whether the login authentication information is correct and valid includes the operation as follows.

When it is determined that the login authentication information is correct and valid, it is determined whether lower-level login authentication information is present, and if so, the lower-level login authentication information is set as an invalid state.

In step 405, the cloud server returns the determination result to the client which controls the launch of the first object according to the determination result.

By means of the technical solution of the present embodiment, login registration information sent by a client is received; the login registration information is stored, and the login registration information is managed and controlled; login authentication information sent by the client is received, wherein the login authentication information is used for launching a first object; it is determined whether the login authentication information is correct and valid, and a determination result is generated; and the determination result is returned to the client, in order that the client controls the launch of the first object according to the determination result. Thus, login authentication information for a first object is managed and controlled by a cloud server, so that a leaked password can be conveniently invalidated, leakage of important data can be prevented immediately, and the safety level of a terminal is improved.

### Embodiment 5

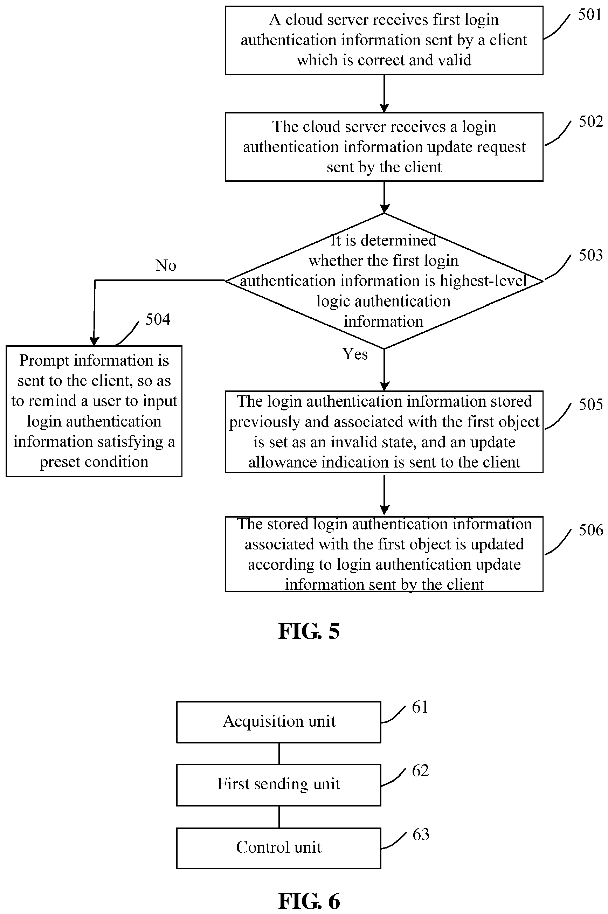

FIG. 5 is a flowchart 5 of an information processing method according to a background embodiment useful for understanding the invention. As illustrated in FIG. 5, the information processing method, applied to a server side, mainly includes the operations as follows.

In step 501, a cloud server receives first login authentication information sent by a client which is correct and valid.

Herein, the first login authentication information is used for launching a first object.

In step 502, the cloud server receives a login authentication information update request sent by the client, and then executes step 503.

In step 503, it is determined whether the first login authentication information is highest-level login authentication information, if so, step 505 is executed, and if not, step 504 is executed.

Herein, the cloud server stores login authentication information for launching a first object, the login authentication information includes user names and passwords, a user name corresponds to N passwords with different levels, and N is a positive integer greater than or equal to 2.

In step 504, prompt information is sent to the client, so as to remind a user to input login authentication information satisfying a preset condition.

Here, the client may output prompt information in a first manner, wherein the first manner includes, but not limited to, a mail, a short message or a voice.

In step 505, the login authentication information stored previously and associated with the first object is set as an invalid state, an update allowance indication is sent to the client, and then step 506 is executed.

In step 506, the stored login authentication information associated with the first object is updated according to login authentication update information sent by the client, wherein the login authentication update information includes user names and passwords, a user name corresponds to M passwords with different levels, and M is a positive integer greater than or equal to 2.

Here, M may be the same as or different from N.

Thus, when a user inputs login authentication information satisfying a preset condition, a cloud server may allow the user to reset login authentication information for launching a first object, thereby improving the safety level of a terminal. When the terminal is stolen or the user name and password of an application are stolen, the login authentication information can be changed immediately, thereby preventing leakage of important data, and improving the safety level of the terminal.

### Embodiment 6

FIG. 6 is a structure diagram 1 of an information processing device according to an embodiment of the disclosure. As illustrated in FIG. 6, the device includes an acquisition unit 61, a first sending unit 62 and a control unit 63.

The acquisition unit 61 is configured to acquire login authentication information input by a user on a login interface of a client, wherein the login authentication information is used for launching a first object.

The first sending unit 62 is configured to send the login authentication information to a cloud server which determines whether the login authentication information is correct and valid.

The control unit 63 is configured to control the launch of the first object according to a determination result returned by the cloud server.

In a specific sub-embodiment, the control unit 63 is further configured to:
disable, when the determination result is that the login authentication information is incorrect or correct but invalid, the client to launch the first object; and
control, when the determination result is that the login authentication information I correct and valid, the client to launch the first object

The acquisition unit 61 is further configured to acquire login registration information input by a user on a registration interface of a client, wherein the login registration information includes the login authentication information for launching a first object, the login authentication information includes user names and passwords, a user name corresponds to N passwords with different levels, and N is a positive integer greater than or equal to 2.

Correspondingly, the first sending unit 62 is further configured to send the login registration information to a cloud server which manages and controls the login registration information.

The information processing device may be arranged in a client or a terminal.

The information processing device in the present embodiment can conveniently invalidate leaked passwords and can prevent leakage of important data immediately, thereby improving the safety level of a terminal, and improving the usage experience of a user.

Those skilled in the art should understand that implementation functions of each unit in the information processing device as illustrated in FIG. 6 may be understood with reference to relevant description of the foregoing information processing method.

During practical application, the control unit 63 may be implemented by a Central Processing Unit (CPU), a Micro Processor Unit (MPU), a Digital Signal Processor (DSP), or a Field-Programmable Gate Array (FPGA) in the information processing device or a terminal to which the information processing device pertains; the acquisition unit 61 may be implemented by a receiver; and the first sending unit 61 may be implemented by a sender.

### Embodiment 7

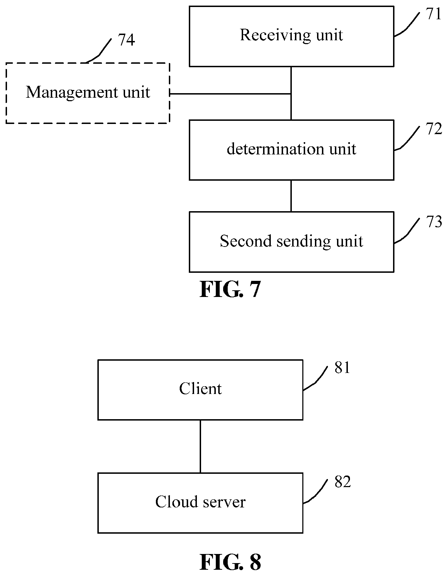

FIG. 7 is a structure diagram 2 of an information processing device according to an embodiment of the disclosure. As illustrated in FIG. 7, the device includes a receiving unit 71, a determination unit 72 and a second sending unit 73.

The receiving unit 71 is configured to receive login authentication information sent by a client, wherein the login authentication information is used for launching a first object.

The determination unit 72 is configured to determine whether the login authentication information is correct and valid, and generate a determination result.

The second sending unit 73 is configured to return the determination result to the client which controls the launch of the first object according to the determination result.

The determination unit 72 is further configured to:
determine, when it is determined that the login authentication information is correct and valid, whether lower-level login authentication information is present, and set, if so, the lower-level login authentication information as an invalid state.

The receiving unit 71 is further configured to receive login registration information sent by a client, wherein the login registration information includes the login authentication information for launching a first object, the login authentication information includes user names and passwords, a user name corresponds to N passwords with different levels, and N is a positive integer greater than or equal to 2.

In a specific sub-embodiment, the device further includes:
a management unit 74, configured to store the login registration information, and manage and control the login registration information.

In a specific sub-embodiment, the determination unit 72 is further configured to: determine, when the receiving unit 71 receives first login authentication information which is correct and valid and is sent by the client, whether the first login authentication information is highest-level login authentication information if the receiving unit 71 also receives a login authentication information update request sent by the client, wherein the first login authentication information is used for launching a first object.

Correspondingly, the management unit 74 is further configured to:
control, when the first login authentication information is not the highest-level logic authentication information, the second sending unit 73 to send prompt information to the client which reminds a user to input login authentication information satisfying a preset condition; and
set, when the first login authentication information is the highest-level logic authentication information, the login authentication information stored previously and associated with the first object as an invalid state, send an update allowance indication to the client through the second sending unit 73, and update the stored login authentication information associated with the first object according to login authentication update information received by the receiving unit 71 and sent by the client, wherein the login authentication update information includes user names and passwords, a user name corresponds to M passwords with different levels, and M is a positive integer greater than or equal to 2.

The information processing device may be arranged in a cloud server.

According to the information processing device in the present embodiment, login authentication information for a first object is managed and controlled by a cloud server, so that a leaked password can be conveniently invalidated, leakage of important data can be prevented immediately, and the safety level of a terminal is improved.

Those skilled in the art should understand that implementation functions of each unit in the information processing device as illustrated in FIG. 7 may be understood with reference to relevant description of the foregoing information processing method.

During a practical application, the determination unit 72 and the management unit 74 are may be implemented by a CPU, an MPU, a DSP or an FPGA in the information processing device or a server to which the information processing device pertains; the receiving unit 71 may be implemented by a receiver; and the second sending unit 73 may be implemented by a sender.

### Embodiment 8

FIG. 8 is a structure diagram of an information processing system according to an embodiment of the disclosure. As illustrated in FIG. 8, the system includes a client 81 and a cloud server 82.

The client 81 is configured to acquire login authentication information for launching a first object input by a user, send the login authentication information to the cloud server 82 which determines whether the login authentication information is correct and valid, and control the launch of the first object according to a determination result returned by the cloud server 82.

The cloud server 82 is configured to receive the login authentication information for launching the first object sent by the client 81, determine whether the login authentication information is correct and valid, generate a determination result, and return the determination result to the client 81.

The client includes the information processing device as illustrated in FIG. 6, and the cloud server includes the information processing device as illustrated in FIG. 7, which will not be elaborated herein.

The disclosure provides a computer storage medium. The computer storage medium stores computer-executable instructions. The computer-executable instructions are used for executing the above-mentioned information processing method.

In some embodiments provided by the disclosure, it will be appreciated that the disclosed equipment and method may be implemented in another manner. The equipment embodiment described above is only schematic, for example, division of the units is only logic function division, and other division manners may be adopted during practical implementation. For example, multiple units or components may be combined or integrated into another system, or some characteristics may be neglected or not executed. In addition, coupling or direct coupling or communication connection among displayed or discussed components may be indirect coupling or communication connection, implemented through some interfaces, of the equipment or the units, and may be electrical and mechanical or in other forms.

The above-mentioned units described as separate parts may or may not be physically separated, and parts displayed as units may or may not be physical units, namely may be located in the same place, or may also be distributed to multiple network units. Part or all of the units may be selected to achieve the purpose of the solutions of the embodiment according to a practical requirement.

In addition, each function unit in each embodiment of the disclosure may be integrated into a processing unit, each unit may also exist independently, and two or more than two units may also be integrated into a unit. The above-mentioned integrated unit may be implemented in a hardware form, and may also be implemented in form of hardware and software function unit.

Those skilled in the art should know that all or part of the steps of the above-mentioned method embodiment may be implemented by instructing related hardware through a program, the above-mentioned program may be stored in a computer-readable storage medium, and the program is executed to execute the steps of the above-mentioned method embodiment; and the above-mentioned storage medium includes: various media capable of storing program codes such as mobile storage equipment, a Read-Only Memory (ROM), a magnetic disk or an optical disk.

Or, when being implemented in form of software function module and sold or used as an independent product, the integrated unit of the disclosure may also be stored in a computer-readable storage medium. Based on such an understanding, the essence of the technical solution of the embodiment of the disclosure or parts making contributions to the conventional art may be embodied in form of software product, and the computer software product is stored in a storage medium, including a plurality of instructions configured to enable a piece of computer equipment (personal computer, server, network equipment or the like) to execute all or part of the method in each embodiment of the disclosure. The above-mentioned storage medium includes: various media capable of storing program codes such as mobile storage equipment, an ROM, a magnetic disk or an optical disk.

The above is only the preferred embodiment of the invention and modifications may be made within the scope of the invention as defined by the claims.

### INDUSTRIAL APPLICABILITY

In the embodiment of the disclosure, login authentication information input on a login interface of a client is acquired, wherein the login authentication information is used for launching a first object; the login authentication information is sent to a cloud server, in order that the cloud server determines whether the login authentication information is correct and valid; and the launch of the first object is controlled according to a determination result returned by the cloud server. Thus, a leaked password can be conveniently invalidated, leakage of important data can be prevented immediately, the safety level of a mobile terminal is improved, and the usage experience of a user is improved.

## Claims

1. An information processing method, comprising:
receiving login authentication information sent by a client (301), the login authentication information comprising a user name and a password and being used in launching a first object;
determining whether the login authentication information is correct and valid, and generating a determination result (302),
wherein the login authentication information is determined to be correct and valid when the user name of the login authentication information is correct, the password of the login authentication information is one of N different levels of passwords corresponding to the user name, and a level of the password of the login authentication information is higher than a level of a previously input password, N being a positive integer greater than or equal to 2;
determining, when it is determined that the login authentication information is correct and valid, whether login authentication information of which password levels are lower than that of the login authentication information exists, and when it is determined that the login authentication information of which the password levels are lower than that of the login authentication information exists, setting the login authentication information of which password levels are lower than that of the login authentication information as an invalid state; and
returning the determination result to the client which controls launch of the first object according to the determination result (303).

2. The method according to claim 1, further comprising:
receiving login registration information sent by the client (401), wherein the login registration information comprises the login authentication information; and
storing the login registration information, and managing and controlling the login registration information (402).

3. The method according to claim 1, further comprising:
receiving the login authentication information which is correct and valid and is sent by the client (501);
determining, when a login authentication information update request sent by the client is received, whether the login authentication information is a login authentication information of which password level is the highest in the N passwords with different levels (503);
if not, sending prompt information to the client (504), the prompt information being configured for reminding a user to input login authentication information satisfying a preset condition; and
if so, setting the login authentication information stored previously and associated with the first object as an invalid state, sending an update allowance indication to the client (505), and updating the stored login authentication information associated with the first object according to login authentication update information sent by the client (506), wherein the login authentication update information comprises user names and passwords, and a user name corresponds to M passwords with different levels, M being a positive integer greater than or equal to 2.

4. An information processing device, comprising:
a receiving unit (71), configured to receive login authentication information sent by a client, the login authentication information comprising a user name and a password and being used in launching a first object;
a determination unit (72), configured to determine whether the login authentication information is correct and valid, and generate a determination result,
wherein the determination unit determines that the login authentication information is correct and valid when the user name of the login authentication information is correct, and the password of the login authentication information is one of N different levels of passwords corresponding to the user name, and a level of the password of the login authentication information is higher than a level of a previously input password, N being a positive integer greater than or equal to 2;
the determination unit (72) is further configured to determine, when it is determined that the login authentication information is correct and valid, whether login authentication information of which password levels are lower than that of the login authentication information exists, and set, when determined that the login authentication information of which the password levels are lower than that of the login authentication information exists, the login authentication information of which password levels are lower than that of the login authentication information as an invalid state; and
a second sending unit (73), configured to return the determination result to the client.

5. The device according to claim 4, wherein
the receiving unit (71) is further configured to receive login registration information sent by the client, wherein the login registration information comprises the login authentication information; and
the device further comprises:
a management unit (74), configured to store the login registration information, and manage and control the login registration information.

6. The device according to claim 5, wherein
the determination unit (72) is further configured to: determine, when the receiving unit (71) receives the login authentication information sent by the client which is correct and valid and receives a login authentication information update request sent by the client, whether the login authentication information is a login authentication information of which password level is the highest in the N passwords with different levels;
correspondingly, the management unit (74) is further configured to:
control, when the login authentication information is not the login authentication information of which the password level is the highest in the N passwords with different levels, the second sending unit (73) to send prompt information to the client which reminds a user to input login authentication information satisfying a preset condition; and
set, when the login authentication information is the login authentication information of which the password level is the highest in the N passwords with different levels, the login authentication information stored previously and associated with the first object as an invalid state, send an update allowance indication to the client through the second sending unit (73), and update the stored login authentication information associated with the first object according to login authentication update information received by the receiving unit (71) and sent by the client, wherein the login authentication update information comprises user names and passwords, and a user name corresponds to M passwords with different levels, M being a positive integer greater than or equal to 2.

7. An information processing system, comprising:
a client (81), configured to acquire login authentication information for launching a first object input by a user, send the login authentication information to a cloud server (82) which determines whether the login authentication information is correct and valid, and control launch of the first object according to a determination result returned by the cloud server (82); and
the cloud server (82) comprising the information processing device according to claim 4.

## Patentansprüche

1. Informationsverarbeitungsverfahren, umfassend:
Empfangen von einem Client (301) abgesandter Login-Authentifizierungsinformationen, wobei die Login-Authentifizierungsinformationen einen Benutzernamen und ein Passwort umfassen und bei der Ausführung eines ersten Objektes verwendet werden;
Ermitteln, ob die Login-Authentifizierungsinformationen richtig und gültig sind und Erzeugen eines Ermittlungsergebnisses (302),
wobei die Login-Authentifizierungsinformationen als richtig und gültig gelten, wenn der Benutzername der Login-Authentifizierungsinformationen korrekt ist, das Passwort der Login-Authentifizierungsinformationen eine von N unterschiedlichen Passwortebenen ist, die dem Benutzernamen entsprechen, und eine Ebene des Passworts der Login-Authentifizierungsinformationen höher ist als eine Ebene eines früher eingegebenen Passworts, wobei N eine positive Ganzzahl größer oder gleich 2 ist;
wenn festgestellt wird, dass die Login-Authentifizierungsinformationen richtig und gültig sind: Ermitteln, ob Login-Authentifizierungsinformationen, deren Passwortebenen niedriger sind als die der Login-Authentifizierungsdaten, existieren und, wenn festgestellt wird, dass die Login-Authentifizierungsinformationen, deren Passwortebenen niedriger sind als die der Login-Authentifizierungsdaten, existieren, Einstellen eines ungültigen Zustandes der Login-Authentifizierungsinformationen, deren Passwortebenen niedriger sind als die der Login-Authentifizierungsdaten, und
Zurückgeben des Ermittlungsergebnisses an den Client, der die Ausführung des ersten Objektes gemäß dem Ermittlungsergebnis (303) steuert.

2. Verfahren nach Anspruch 1, ferner umfassend:
Empfangen vom Client (401) abgesandter Login-Anmeldeinformationen, wobei die Login-Anmeldeinformationen die Login-Authentifizierungsinformationen umfassen, und
Speichern der Login-Anmeldeinformationen und Verwalten und Steuern der Login-Anmeldeinformationen (402).

3. Verfahren nach Anspruch 1, ferner umfassend:
Empfangen der Login-Authentifizierungsinformationen, die richtig und gültig sind und vom Client (501) abgesandt werden,
bei Eingang einer vom Client abgesandten Aktualisierungsanforderung über die Login-Authentifizierungsinformationen: Ermitteln, ob es sich bei den Login-Authentifizierungsinformationen um Login-Authentifizierungsinformationen handelt, deren Passwortebene die höchste der N Passwörter mit unterschiedlichen Ebenen (503) ist;
verneinendenfalls, Senden von Eingabeaufforderungsinformationen an den Client (504), wobei die Eingabeaufforderungsinformationen derart konfiguriert sind, dass sie einen Benutzer daran erinnern, Login-Authentifizierungsdaten, die eine vorgegebene Bedingung erfüllen, einzugeben, und
bejahendenfalls, Einstellen eines ungültigen Zustandes der früher gespeicherten, dem ersten Objekt zugeordneten Login-Authentifizierungsdaten, Senden einer Aktualisierungserlaubnismitteilung an den Client (505) und Aktualisieren der dem ersten Objekt zugeordneten gespeicherten Login-Authentifizierungsinformationen gemäß vom Client abgesandten Aktualisierungsinformationen über die Login-Authentifizierungsinformationen (506), wobei die Aktualisierungsinformationen Benutzernamen und Passwörter umfassen und ein Benutzername M Passwörtern mit unterschiedlichen Ebenen entspricht, wobei M eine positive Ganzzahl größer oder gleich 2 ist.

4. Informationsverarbeitungsvorrichtung, umfassend:
eine Empfangseinheit (71), die zum Empfangen von einem Client abgesandter Login-Authentifizierungsinformationen konfiguriert ist, wobei die Login-Authentifizierungsinformationen einen Benutzernamen und ein Passwort umfassen und bei der Ausführung eines ersten Objektes verwendet werden;
eine Ermittlungseinheit (72), die zum Ermitteln, ob die Login-Authentifizierungsinformationen richtig und gültig sind und zum Erzeugen eines Ermittlungsergebnisses konfiguriert ist,
wobei die Ermittlungseinheit feststellt, dass die Login-Authentifizierungsinformationen richtig und gültig sind, wenn der Benutzername der Login-Authentifizierungsinformationen korrekt ist und das Passwort der Login-Authentifizierungsinformationen eine von N unterschiedlichen Passwortebenen ist, die dem Benutzernamen entsprechen, und eine Ebene des Passworts der Login-Authentifizierungsinformationen höher ist als eine Ebene eines früher eingegebenen Passworts, wobei N eine positive Ganzzahl größer oder gleich 2 ist;
die Ermittlungseinheit (72) ferner konfiguriert ist zum Ermitteln, ob Login-Authentifizierungsinformationen, deren Passwortebenen niedriger sind als die der Login-Authentifizierungsdaten, existieren, wenn festgestellt wird, dass die Login-Authentifizierungsinformationen richtig und gültig sind, und zum Einstellen eines ungültigen Zustandes der Login-Authentifizierungsinformationen, deren Passwortebenen niedriger sind als die der Login-Authentifizierungsdaten, wenn festgestellt wird, dass die Login-Authentifizierungsinformationen, deren Passwortebenen niedriger sind als die der Login-Authentifizierungsdaten, existieren, und
eine zweite Sendeeinheit (73), die zum Zurückgeben des Ermittlungsergebnisses an den Client konfiguriert ist.

5. Vorrichtung nach Anspruch 4, wobei:
die Empfangseinheit (71) ferner konfiguriert ist zum Empfangen vom Client abgesandter Login-Anmeldeinformationen, wobei die Login-Anmeldeinformationen die Login-Authentifizierungsinformationen umfassen, und die Vorrichtung ferner umfasst:
eine Verwaltungseinheit (74), die konfiguriert ist zum Speichern der Login-Anmeldeinformationen und Verwalten und Steuern der Login-Anmeldeinformationen.

6. Vorrichtung nach Anspruch 5, wobei
die Ermittlungseinheit (72) ferner konfiguriert ist zum Ermitteln, ob es sich bei den Login-Authentifizierungsinformationen um Login-Authentifizierungsinformationen handelt, deren Passwortebene die höchste der N Passwörter mit unterschiedlichen Ebenen ist, wenn die Empfangseinheit (71) die vom Client abgesandten Login-Authentifizierungsinformationen, die richtig und gültig sind, empfängt und eine vom Client abgesandte Aktualisierungsanforderung über die Login-Authentifizierungsinformationen empfängt,
die Ermittlungseinheit (74) dementsprechend ferner konfiguriert ist zum
Ansteuern der zweiten Sendeeinheit (73) zum Senden von Eingabeaufforderungsinformationen an den Client, die einen Benutzer daran erinnern, Login-Authentifizierungsinformationen, die eine vorgegebene Bedingung erfüllen, einzugeben, wenn es sich bei den Login-Authentifizierungsinformationen nicht um die Login-Authentifizierungsinformationen handelt, deren Passwortebene die höchste der N Passwörter mit unterschiedlichen Ebenen ist, und
Einstellen eines ungültigen Zustandes der früher gespeicherten, dem ersten Objekt zugeordneten Login-Authentifizierungsdaten, wenn es sich bei den Login-Authentifizierungsinformationen, deren Passwortebene die höchste der N Passwörter mit unterschiedlichen Ebenen ist, Senden einer Aktualisierungserlaubnismitteilung an den Client über die zweite Sendeeinheit (73) und Aktualisieren der dem ersten Objekt zugeordneten gespeicherten Login-Authentifizierungsinformationen gemäß von der Empfangseinheit (71) empfangenen und vom Client abgesandten Aktualisierungsinformationen über die Login-Authentifizierungsinformationen, wobei die Aktualisierungsinformationen Benutzernamen und Passwörter umfassen und ein Benutzername M Passwörtern mit unterschiedlichen Ebenen entspricht, wobei M eine positive Ganzzahl größer oder gleich 2 ist.

7. Informationsverarbeitungssystem, umfassend:
einen Client (81), der konfiguriert ist zum Erfassen von einem Benutzer eingegebener Login-Authentifizierungsinformationen zur Ausführung eines ersten Objektes, Senden der Login-Authentifizierungsinformationen an einen Cloud-Server (82), der ermittelt, ob die Login-Authentifizierungsinformationen richtig und gültig sind, und Steuern der Ausführung des ersten Objektes gemäß einem vom Cloud-Server (82) zurückgegebenen Ermittlungsergebnis und
den Cloud-Server (82), der die Informationsverarbeitungsvorrichtung nach Anspruch 4 umfasst.

## Revendications

1. Procédé de traitement d'informations, comprenant les étapes ci-dessous consistant à :
recevoir des informations d'authentification de connexion envoyées par un dispositif client (301), les informations d'authentification de connexion comprenant un nom d'utilisateur et un mot de passe et étant utilisées pour lancer un premier objet ;
déterminer si les informations d'authentification de connexion sont correctes et valides, et générer un résultat de détermination (302) ;
dans lequel les informations d'authentification de connexion sont déterminées comme étant correctes et valides lorsque le nom d'utilisateur des informations d'authentification de connexion est correct, le mot de passe des informations d'authentification de connexion correspond à l'un parmi « N » différents niveaux de mots de passe correspondant au nom d'utilisateur, et un niveau du mot de passe des informations d'authentification de connexion est supérieur à un niveau d'un mot de passe saisi précédemment, « N » étant un nombre entier positif supérieur ou égal à 2 ;
déterminer, lorsqu'il est déterminé que les informations d'authentification de connexion sont correctes et valides, s'il existe des informations d'authentification de connexion dont les niveaux de mots de passe sont inférieurs à ceux des informations d'authentification de connexion, et lorsqu'il est déterminé que les informations d'authentification de connexion, dont les niveaux de mots de passe sont inférieurs à ceux des informations d'authentification de connexion, existent, définir les informations d'authentification de connexion dont les niveaux de mots de passe sont inférieurs à ceux des informations d'authentification de connexion comme correspondant à un état non valide ; et
renvoyer le résultat de détermination au dispositif client qui commande le lancement du premier objet selon le résultat de détermination (303).

2. Procédé selon la revendication 1, comprenant en outre les étapes ci-dessous consistant à :
recevoir des informations d'enregistrement de connexion envoyées par le dispositif client (401), dans lequel les informations d'enregistrement de connexion comprennent les informations d'authentification de connexion ; et
stocker les informations d'enregistrement de connexion, et gérer et commander les informations d'enregistrement de connexion (402).

3. Procédé selon la revendication 1, comprenant en outre les étapes ci-dessous consistant à :
recevoir les informations d'authentification de connexion qui sont correctes et valides et qui sont envoyées par le dispositif client (501) :
déterminer, lorsqu'une demande de mise à jour d'informations d'authentification de connexion envoyée par le dispositif client est reçue, si les informations d'authentification de connexion correspondent à des informations d'authentification de connexion dont le niveau de mot de passe est le plus élevé parmi les « N » mots de passe de différents niveaux (503) ;
dans la négative, envoyer des informations d'invite au dispositif client (504), les informations d'invite étant configurées de manière à rappeler à un utilisateur de saisir des informations d'authentification de connexion satisfaisant une condition prédéfinie : et
dans l'affirmative, définir les informations d'authentification de connexion stockées précédemment et associées au premier objet, comme correspondant à un état non valide, envoyer une indication d'autorisation de mise à jour au dispositif client (505), et mettre à jour les informations d'authentification de connexion stockées associées au premier objet, selon des informations de mise à jour d'authentification de connexion envoyées par le dispositif client (506), dans lequel les informations de mise à jour d'authentification de connexion comprennent des noms d'utilisateurs et des mots de passe, et un nom d'utilisateur correspond à « M » mots de passe de différents niveaux, « M » étant un nombre entier positif supérieur ou égal à 2.

4. Dispositif de traitement d'informations, comprenant :
une unité de réception (71), configurée de manière à recevoir des informations d'authentification de connexion envoyées par un dispositif client, les informations d'authentification de connexion comprenant un nom d'utilisateur et un mot de passe et étant utilisées pour lancer un premier objet ;
une unité de détermination (72), configurée de manière à déterminer si les informations d'authentification de connexion sont correctes et valides, et à générer un résultat de détermination ;
dans lequel l'unité de détermination détermine que les informations d'authentification de connexion sont correctes et valides lorsque le nom d'utilisateur des informations d'authentification de connexion est correct, le mot de passe des informations d'authentification de connexion correspond à l'un parmi « N » différents niveaux de mots de passe correspondant au nom d'utilisateur, et un niveau du mot de passe des informations d'authentification de connexion est supérieur à un niveau d'un mot de passe saisi précédemment, « N » étant un nombre entier positif supérieur ou égal à 2 ;
l'unité de détermination (72) est en outre configurée de manière à déterminer, lorsqu'il est déterminé que les informations d'authentification de connexion sont correctes et valides, s'il existe des informations d'authentification de connexion dont les niveaux de mots de passe sont inférieurs à ceux des informations d'authentification de connexion, et à définir, lorsqu'il est déterminé que les informations d'authentification de connexion, dont les niveaux de mots de passe sont inférieurs à ceux des informations d'authentification de connexion, existent, les informations d'authentification de connexion dont les niveaux de mots de passe sont inférieurs à ceux des informations d'authentification de connexion, comme correspondant à un état non valide ; et
une seconde unité d'envoi (73), configurée de manière à renvoyer le résultat de détermination au dispositif client.

5. Dispositif selon la revendication 4, dans lequel :
l'unité de réception (71) est en outre configurée de manière à recevoir des informations d'enregistrement de connexion envoyées par le dispositif client, dans lequel les informations d'enregistrement de connexion comprennent les informations d'authentification de connexion ; et
le dispositif comprend en outre :
une unité de gestion (74), configurée de manière à stocker les informations d'enregistrement de connexion, et à gérer et commander les informations d'enregistrement de connexion.

6. Dispositif selon la revendication 5, dans lequel :
l'unité de détermination (72) est en outre configurée de manière à : déterminer, lorsque l'unité de réception (71) reçoit les informations d'authentification de connexion envoyées par le dispositif client, lesquelles sont correctes et valides, et reçoit une demande de mise à jour d'informations d'authentification de connexion envoyée par le dispositif client, si les informations d'authentification de connexion correspondent à des informations d'authentification de connexion dont le niveau de mot de passe est le plus élevé parmi les « N » mots de passe de différents niveaux ;
en conséquence, l'unité de gestion (74) est en outre configurée de manière à :
commander, lorsque les informations d'authentification de connexion ne correspondent pas aux informations d'authentification de connexion dont le niveau de mot de passe est le plus élevé parmi les « N » mots de passe de différents niveaux, à la seconde unité d'envoi (73), d'envoyer des informations d'invite, au dispositif client, qui rappellent à un utilisateur de saisir des informations d'authentification de connexion satisfaisant une condition prédéfinie ; et
définir, lorsque les informations d'authentification de connexion correspondent aux informations d'authentification de connexion dont le niveau de mot de passe est le plus élevé parmi les « N » mots de passe de différents niveaux, les informations d'authentification de connexion stockées précédemment et associées au premier objet, comme correspondant à un état non valide, envoyer une indication d'autorisation de mise à jour au dispositif client, par le biais de la seconde unité d'envoi (73), et mettre à jour les informations d'authentification de connexion stockées associées au premier objet selon des informations de mise à jour d'authentification de connexion reçues par l'unité de réception (71) et envoyées par le dispositif client, dans lequel les informations de mise à jour d'authentification de connexion comprennent des noms d'utilisateurs et des mots de passe, et un nom d'utilisateur correspond à « M » mots de passe de différents niveaux, « M » étant un nombre entier positif supérieur ou égal à 2.

7. Système de traitement d'informations, comprenant :
un dispositif client (81), configuré de manière à acquérir des informations d'authentification de connexion pour lancer un premier objet, saisies par un utilisateur, à envoyer les informations d'authentification de connexion à un serveur infonuagique (82) qui détermine si les informations d'authentification de connexion sont correctes et valides, et à commander le lancement du premier objet selon un résultat de détermination renvoyé par le serveur infonuagique (82) ; et
dans lequel le serveur infonuagique (82) comprend le dispositif de traitement d'informations selon la revendication 4.
